# EUROPÄISCHE PATENTSCHRIFT

(11) **EP 2 462 647 B1**
(45) Veröffentlichungstag und Bekanntmachung des Hinweises auf die Patenterteilung: **11.09.2013**
(21) Anmeldenummer: 10737279.9
(22) Anmeldetag: 19.07.2010
(51) Int. Cl.: H01M 8/04

(54) **VERFAHREN ZUM BETREIBEN EINES BRENNSTOFFZELLENSYSTEMS IN EINEM FAHRZEUG**
METHOD FOR OPERATION OF A FUEL CELL SYSTEM IN A VEHICLE
PROCÉDÉ DE FONCTIONNEMENT D'UN SYSTÈME DE PILES À COMBUSTIBLE DANS UN VÉHICULE

(30) Priorität: 05.08.2009 DE 102009036199
(43) Veröffentlichungstag der Anmeldung: 13.06.2012
(73) Patentinhaber: Daimler AG, 70327 Stuttgart (DE)
(72) Erfinder: MÜLLER, Helmut, 73230 Kirchheim (DE); SCHMALZRIEDT, Sven, 73760 Ostfildern (DE); WEIGELE, Klaus, 73278 Schlierbach (DE)
(74) Vertreter: JENSEN & SON
(86) Internationale Anmeldenummer: PCT/EP2010/004379
(87) Internationale Veröffentlichungsnummer: WO 2011/015282

(56) Entgegenhaltungen:
- WO-A1-2006/117969
- WO-A1-2008/155629
- US-A1- 2001 053 950

## Beschreibung

Die Erfindung betrifft ein Verfahren zum Betreiben eines Brennstoffzellensystems in einem Fahrzeug, nach der im Oberbegriff von Anspruch 1 näher definierten Art.

Aus dem allgemeinen Stand der Technik sind Stopp/Start-Systeme bei Fahrzeugen bekannt. Insbesondere bei Kraftfahrzeugen jeglicher Antriebsart ist es zur Einsparung von Energie und zur Reduzierung von Geräuschemissionen zwischenzeitlich üblich, bei kurzen Phasen, in denen keine Leistung benötigt wird, beispielsweise an einer Kreuzung, einer roten Ampel oder beim Rollen des Fahrzeugs, das Antriebsaggregat abzuschalten, um so Energie einzusparen. Typischerweise werden dabei neben dem Antriebsaggregat selbst auch Nebenverbraucher, wie beispielsweise Pumpen, Kompressoren und Ähnliches, mit abgeschaltet oder zumindest in einen Zustand reduzierter Leistung gebracht. Damit lassen sich sowohl der Bedarf an Energie als auch die Emission von Schadstoffen und Geräuschen deutlich reduzieren.

Derartige Systeme sind dabei auch in Fahrzeugen bekannt, welche mit einem Brennstoffzellensystem zur Erzeugung der notwendigen Antriebsleistung ausgestattet sind. So beschreibt beispielsweise das US-Patent 6,484,075 B2 ein Verfahren, um eine Brennstoffzelle für die Dauer eines Fahrzeugstopps vorübergehend in einen Stoppmodus zu versetzen. Ausgehend von einer Aufforderung des Fahrzeugs in einen Stoppmodus des Brennstoffzellensystems zu wechseln wird zuerst überprüft, ob das Brennstoffzellensystem in der Lage ist, dieser Anforderung nachzukommen. Sofern dies der Fall ist, wird in einen Stoppmodus gewechselt, in dem sowohl die Brenngasversorgung als auch die Luftversorgung der Brennstoffzelle vollkommen abgeschaltet werden.

Dadurch werden Energie und Emissionen eingespart. Allerdings hat das dort beschriebene Verfahren den entscheidenden Nachteil, dass durch das ständige Ein- und Ausschalten eine vergleichsweise schnelle Alterung der Brennstoffzelle auftritt, und dass zum Wiederanfahren sowohl der Wasserstoffversorgung als auch der Luftversorgung aus dem vollständigen Stillstand heraus eine vergleichsweise lange Zeit benötigt wird, in der beim Wiederstart des Fahrzeugs, die Brennstoffzelle keine Antriebsleistung liefern kann.

Es ist daher die Aufgabe der hier vorliegenden Erfindung, ein Verfahren zum Betreiben eines Brennstoffzellensystems in einem Fahrzeug dahingehend weiterzubilden, dass dieses bei einem Stopp/Start-Betrieb eine komfortablere Funktionalität gewährleistet und gleichzeitig eine hohe Lebensdauer der Brennstoffzelle ermöglicht.

Erfindungsgemäß wird diese Aufgabe durch die im kennzeichnenden Teil des Anspruchs 1 genannten Merkmale gelöst. Weitere vorteilhafte Ausgestaltungen und Weiterbildungen des erfindungsgemäßen Verfahrens ergeben sich dabei aus den abhängigen Unteransprüchen.

Dadurch, dass bei dem erfindungsgemäßen Verfahren mit dem Wechsel in den Stoppmodus die elektrische Kontaktierung der Brennstoffzelle aufrechterhalten bleibt, kann weiterhin ein Strom aus der Brennstoffzelle gezogen werden, sodass restliche Medien, und hier insbesondere restlicher Sauerstoff im Bereich der Brennstoffzelle, abgebaut werden. Dadurch werden für die einzelnen Zellen der Brennstoffzelle schädliche Spannungen während des Stoppmodus vermieden, welche die Lebensdauer der Zelle nachteilig beeinflussen würden. Um für den Abbau eine ausreichende Menge an Brenngas, insbesondere Wasserstoff zur Verfügung zu haben, wird bei dem erfindungsgemäßen Verfahren die Zufuhr des Brenngases zur Anodenseite der Brennstoffzelle nicht unterbrochen, sondern lediglich auf einen reduzierten Druck heruntergefahren. Damit lässt sich bei abgeschalteter oder minimierter Luftversorgung des Kathodenbereichs der Brennstoffzelle ein übermäßig großer Differenzdruck zwischen dem Anodenbereich und dem Kathodenbereich verhindern. Falls die Brennstoffzelle, wie sie dies gemäß einer besonders bevorzugten Weiterbildung ist, als PEM-Brennstoffzelle ausgebildet ist, sorgt diese verringerte Druckdifferenz dafür, dass die Membranen der Brennstoffzelle entsprechend geschont werden und nicht mit einem zu hohen Differenzdruck belastet sind.

Gemäß einer sehr günstigen und vorteilhaften Weiterbildung des erfindungsgemäßen Verfahrens ist es ferner vorgesehen, dass in dem Brennstoffzellensystem unverbrauchtes Brenngas von einem Bereich nach der Anode über eine Rezirkulationsfördereinrichtung zusammen mit frischem Brenngas aus der Ventileinrichtung zur Brenngaszufuhr der Anode zugeführt wird, wobei der Wechsel in den Stoppmodus ferner umfasst, dass der von der Rezirkulationsfördereinrichtung geförderte Massenstrom auf einen vorgegebenen Wert reduziert wird. Damit wird während des Stoppmodus bei der Verwendung in einem Brennstoffzellensystem mit Anodenrezirkulation die Rezirkulationsfördereinrichtung weiterhin betrieben. Diese kann gemäß einer sehr vorteilhaften Weiterbildung als elektromotorisch angetriebenes Rezirkulationsgebläse ausgebildet sein. In diesem Fall kann das Rezirkulationsgebläse einfach und effizient auf eine vorgegebene Drehzahl gesetzt werden, welche deutlich niedriger als die Drehzahl im regulären Betrieb ist. Zusammen mit dem geringfügig aufrechterhaltenden Druck und damit der geringfügigen Zufuhr an Wasserstoff gemäß dem erfindungsgemäßen Verfahren entsteht so ein Aufbau, bei dem durch die Rezirkulationsfördereinrichtung die Gase im Bereich der Anode und der Rezirkulationsleitung weiterhin bewegt werden, sodass eventuell in den Kathodenbereich der Brennstoffzelle eindringender Sauerstoff durch das Belasten der Brennstoffzelle mit einem Strom entsprechend abgebaut werden kann.

Gemäß einer sehr vorteilhaften Ausgestaltung des erfindungsgemäßen Verfahrens kann es außerdem vorgesehen sein, dass die Brennstoffzelle elektrisch mit einer Elektronikeinheit zur Abnahme der Leistung der Brennstoffzelle gekoppelt ist, durch welche auch überschüssige Leistung der Brennstoffzelle in einer Energiespeichereinrichtung gespeichert wird, wobei durch die Elektronikeinheit nach dem Wechsel in den Stoppmodus ein elektrischer Strom aus der Brennstoffzelle gezogen wird, bis eine vorgegebene Spannung erreicht wird, und wonach die Brennstoffzelle geregelt auf einer konstanten Spannung gehalten wird. Diese sehr vorteilhafte Ausgestaltung des erfindungsgemäßen Verfahrens sieht den sehr häufig üblichen Einsatz der Brennstoffzelle zusammen mit einer Energiespeichereinrichtung, beispielsweise einer Batterie, vor. In Situationen, in denen überschüssige Leistung der Brennstoffzelle zur Verfügung steht, oder auch in Situationen, in denen das Fahrzeug über den elektrischen Fahrmotor im generatorischen Betrieb abgebremst wird, kann so elektrische Leistung, welche im System entsteht und nicht unmittelbar benötigt wird, zwischengespeichert werden. Nun hat der Aufbau den entscheidenden Vorteil, dass mit dem Eintritt in den Stoppmodus zuerst ein Strom durch die Elektronikeinheit aus der Brennstoffzelle entnommen wird. Dieser Strom bewirkt, dass die Spannung entsprechend niedrig gehalten ist, und so keine Korrosion im Bereich der Einzelzellen in der Brennstoffzelle auftritt. Eine günstige Grenze für die Spannung sind dabei ca. 0,85 Volt je Einzelzelle. Über den Strom wird außerdem im Kathodenbereich befindlicher Restsauerstoff abgebaut, da dieser mit dem Brenngas reagieren kann, da die Brenngasversorgung gemäß der Erfindung immer noch auf einem niedrigen Niveau weiterläuft. Nachdem die Restgase aufgebraucht sind, wird über die Elektronikeinheit die Spannung auf einem vorgegebenen niedrigen Niveau gehalten, um auch weiterhin die Betriebsbereitschaft aufrechtzuerhalten. Außerdem erlaubt dieses niedrige Spannungsniveau, welches dann typischerweise am gesamten Hochspannungsbus des Brennstoffzellensystems anliegt, einen zuverlässigen Betrieb desselben, da dieser beispielsweise auch für den Antrieb der Rezirkulationsfördereinrichtung mitverantwortlich ist. Dabei kann es durchaus dazu kommen, dass ein negativer Strom in die Brennstoffzelle fließt, die hierfür benötigte Leistung kann aus der Energiespeichereinrichtung entnommen werden und ist typischerweise sehr gering.

In einer günstigen Weiterbildung des erfindungsgemäßen Verfahrens ist es dabei vorgesehen, dass beim Wechsel in den Stoppmodus die Luftfördereinrichtung komplett angehalten wird. Dieser Aufbau, welcher insbesondere beim Einsatz von volumetrischen Verdichtern und dergleichen sehr einfach zu realisieren ist, da diese sehr schnell wieder anlaufen und einen maximalen Luftstrom zur Verfügung stellen können, ist hinsichtlich der Geräuschemissionen und des Energiebedarfs sehr günstig.

Aufgrund der dann nicht mehr erfolgenden Sauerstoffversorgung des Kathodenbereichs können die Spannungen der Einzelzellen weiter abfallen und auseinanderlaufen. Um auch in solchen Fällen eine Korrosion der Einzelzellen der Brennstoffzelle sicher und zuverlässig zu vermeiden, kann es gemäß einer sehr vorteilhaften Weiterbildung des erfindungsgemäßen Verfahrens vorgesehen sein, dass, nachdem der Stoppmodus eine vorgegebene Zeitspanne angedauert hat, eine vorübergehende Erhöhung des Luftmassenstroms durchgeführt wird, wobei nach Erreichen eines vorgegebenen Werts des Luftmassenstroms wieder zurück in den Stoppmodus gewechselt wird. Dieses kurzzeitige Anlaufen der Luftfördereinrichtung erzeugt vorübergehend einen Luftmassenstrom in den Kathodenbereich der Brennstoffzelle. Bei diesem sogenannten Refresh kommt es nun wieder zu einer Erhöhung der Spannung im Bereich der Brennstoffzelle und somit zu einer Verringerung der Gefahr von Korrosion, da die eingangs beschriebenen Mechanismen erneut einsetzen. Da lediglich der Luftmassenstrom vorübergehend erhöht wird und die anderen Vorgänge und Komponenten in ihrem Zustand für den Stoppmodus verharren, ist dieser Refresh mit einem vergleichsweise geringen Energiebedarf nur geringen und Geräuschemission behaftet. Er kann jedoch einen erheblichen Vorteil hinsichtlich der Korrosion und damit der Lebensdauer der Brennstoffzelle ermöglichen.

In einer weiteren sehr günstigen Ausgestaltung des erfindungsgemäßen Verfahrens kann es vorgesehen sein, dass als Luftfördereinrichtung ein Strömungsverdichter eingesetzt wird, welcher während des Stoppmodus auf einer vorgegebenen niedrigen Drehzahl weiterläuft. Strömungsverdichter, welche über ein Gebläse oder Ähnliches den Luftmassenstrom für die Brennstoffzelle fördern, sind aus dem allgemeinen Stand der Technik bei Brennstoffzellensystemen bekannt und haben gegenüber volumetrischen Verdichtern entsprechende Vorteile. Allerdings benötigen Strömungsverdichter eine vergleichsweise hohe Drehzahl, um den geförderten Luftmassenstrom bereitstellen zu können. In einem Stoppmodus wird ein derartiger Strömungsverdichter daher nicht vollkommen angehalten, sondern läuft gemäß der Erfindung auf einer niedrigen Drehzahl weiter. Dies hat den Vorteil, dass er beim Wiederstart des Systems weitaus weniger stark beschleunigt werden muss, was entscheidende Vorteile hinsichtlich des Energiebedarfs und der Zeitdauer bis zum Wiederstart des Brennstoffzellensystems hat. Ein weiterer Aspekt dieses Weiterlaufenlassens des Strömungsverdichters als Luftfördereinrichtung auf einer niedrigen Drehzahl liegt darin, dass weiterhin ein geringer Luftmassenstrom zu der Brennstoffzelle gefördert wird, sodass der oben beschriebene Refresh in dieser Ausgestaltung des erfindungsgemäßen Verfahrens typischerweise unterbleiben kann.

Im erfindungsgemäßen Verfahren ist vorgesehen, dass beim Wechsel in den Stoppmodus zwischen dem Luftmassenstrom zur Brennstoffzelle nach der Luftfördereinrichtung und einem Abgasstrom aus dem Brennstoffzellensystem eine Strömungsverbindung geöffnet wird. Eine solche Strömungsverbindung, welche auch als System-Bypass-Ventil bezeichnet werden könnte, schafft also eine Strömungsverbindung aus einem Bereich nach der Luftfördereinrichtung in den Abgasbereich. Ohne den Kathodenbereich der Brennstoffzelle abzusperren, was sehr aufwendige und teure Ventileinrichtungen erforderlich machen würde, welche darüber hinaus störanfällig und schwer sind und einen erheblichen Bauraum benötigen, kann so mit einem einzigen sehr einfachen Ventil erreicht werden, dass für den gegebenenfalls noch geförderten Luftmassenstrom oder den durch einen Staudruck beispielsweise beim Bergabrollen eines Fahrzeugs aufgebauten Luftmassenstrom, ein Weg mit sehr geringem Druckverlust zur Verfügung steht, über welchen ein großer Teil des Luftmassenstroms unmittelbar wieder aus dem Brennstoffzellensystem abfließen kann, ohne zuvor die Brennstoffzelle zu passieren. Dadurch wird die in die Brennstoffzelle beziehungsweise deren Kathodenraum eingetragene Menge an Sauerstoff entsprechend reduziert. Dennoch reicht diese aus, um die oben genannten Probleme hinsichtlich der Korrosion auch ohne Refresh zu verhindern, sofern die Luftfördereinrichtung als Strömungsverdichter ausgebildet ist und auf niedriger Drehzahl weiterläuft.

Weitere vorteilhafte Ausgestaltungen und Weiterbildungen des erfindungsgemäßen Verfahrens ergeben sich aus den restlichen abhängigen Unteransprüchen und werden anhand der nachfolgend beschriebenen möglichen Verfahrensabläufe, welche unter Bezugnahme auf die Figuren näher erläutert werden, deutlich.

Dabei zeigen:
Fig. 1 ein stark schematisiert angedeutetes Fahrzeug mit einem Brennstoffzellensystem;
Fig. 2 ein Brennstoffzellensystem in einer nicht erfindungsgemäßen Ausführungsform; und
Fig. 3 ein Brennstoffzellensystem in einer erfindungsgemäßen möglichen Ausführungsform.

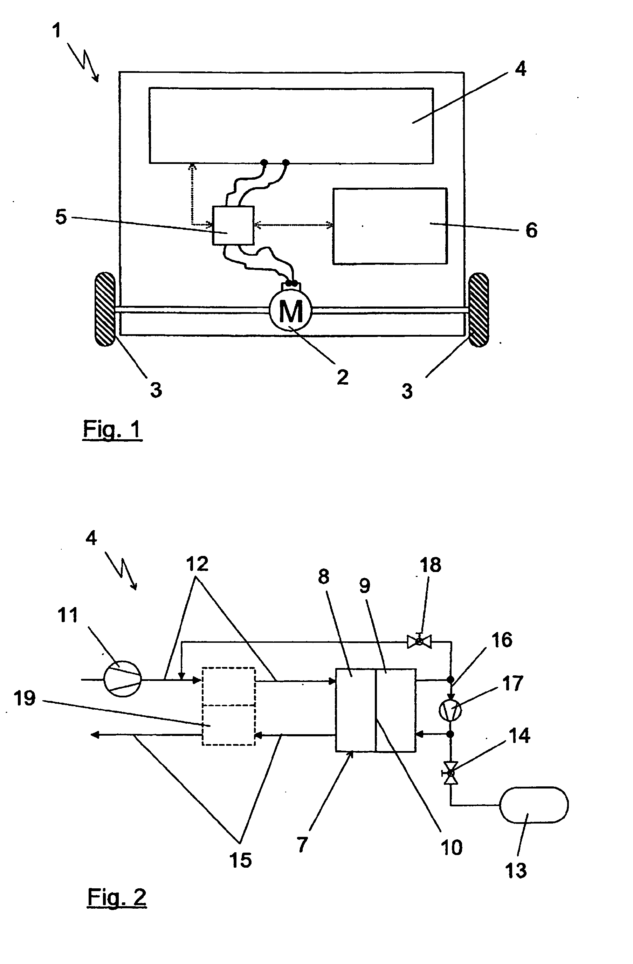

In Figur 1 ist sehr stark schematisiert ein Fahrzeug 1 dargestellt, welches über einen elektrischen Antriebsmotor 2, welcher zwei hier angedeutete Räder 3 antreibt, bewegt werden kann. Das Fahrzeug 1 verfügt über ein Brennstoffzellensystem 4, welches die elektrische Antriebsenergie für den Motor 2 und damit letztlich zum Antrieb des Fahrzeugs 1 zur Verfügung stellt. Dies ist in der Darstellung der Figur 1 über elektrische Leitungen angedeutet, welche das Brennstoffzellensystem 4 und den Antriebsmotor 2 über eine Elektronikeinheit 5 miteinander verbinden. Wie durch die beiden gestrichelten Pfeile angedeutet, steht die Elektronikeinheit 5 außerdem in Korrespondenz mit dem Brennstoffzellensystem 4, um beispielsweise Werte von Sensoren in dem Brennstoffzellensystem 4, welche dieses hinsichtlich Druck, Temperatur und Ähnlichem überwachen, abfragen zu können. Die Elektronikeinheit 5 steht außerdem in korrespondierender Verbindung mit einem Fahrzeugsteuergerät 6, welches in an sich bekannter Art und Weise zur Steuerung des Fahrzeugs vorgesehen ist. Auch dieses Fahrzeugsteuergerät 6 steht über hier nicht dargestellte Sensoren und Aktuatoren mit dem Fahrzeug 1 in Verbindung und kann beispielsweise Beschleunigungswerte, eine Fahrpedalstellung als Referenz für die vom Fahrer gewünschte Leistungsanforderung und dergleichen auswerten.

Das Fahrzeug in der Darstellung der Figur 1 soll nun über ein sogenanntes Stopp/Start-System verfügen. Ein solches Stopp/Start-System sorgt dafür, dass ein Antriebsaggregat des Fahrzeugs 1, hier also das Brennstoffzellensystem 4 immer dann in einen Standbybeziehungsweise Stoppmodus wechselt, wenn vorübergehend keine Leistungsanforderung an das Brennstoffzellensystem 4 gestellt wird. Dies kann beispielsweise bei einem Ampelstopp, beim Ausrollen oder bei einer Bergabfahrt mit rollendem Fahrzeug 1 der Fall sein. Dadurch, dass das Brennstoffzellensystem 4 dann in den Stoppmodus wechselt, in dem es deutlich weniger Energie benötigt und weniger Emissionen sowohl an Schadstoffen als auch an Geräuschen verursacht, entsteht durch ein solches Stopp/Start-System ein sehr energiesparendes und komfortables Fahrzeug 1. Derartige Stopp/Start-Systeme mit ihren Vorteilen sind dabei aus dem allgemeinen Stand der Technik sowohl für Fahrzeuge mit Brennstoffzellensystemen als auch Fahrzeuge mit Verbrennungsmotoren bekannt.

In der Darstellung der Figur 2 ist nun ein beispielhaftes Brennstoffzellensystem 4 detaillierter dargestellt. Den Kern des Brennstoffzellensystems 4 bildet dabei eine Brennstoffzelle 7, welche hier als Stapel von PEM-Brennstoffzellen aufgebaut sein soll. Entsprechend dieser Bauweise weist die Brennstoffzelle 7 einen Kathodenraum 8 sowie einen Anodenraum 9 auf, welche durch die protonenleitenden Membranen 10 voneinander getrennt sind. Dem Kathodenraum 8 wird über eine Luftfördereinrichtung 11, welche hier als volumetrischer Verdichter, beispielsweise als Schrauben- oder Rootsverdichter ausgebildet sein soll, über eine Zuluftleitung 12 ein Luftmassenstrom zur Verfügung gestellt. Der in diesem Luftmassenstrom enthaltene Sauerstoff reagiert nun zumindest teilweise im Bereich der Brennstoffzelle 7 mit einem dem Anodenraum 9 der Brennstoffzelle 7 zugeführten Brenngasstrom. Dieser Brenngasstrom soll in dem hier dargestellten Ausführungsbeispiel ein Wasserstoffstrom sein. Dieser wird dem Anodenraum 9 der Brennstoffzelle 7 aus einer Speichereinrichtung 13 über eine Ventileinrichtung 14 auf einem steuerbar vorgegebenen Druckniveau zur Verfügung gestellt. Die Speichereinrichtung 13 ist dabei insbesondere als Hochdruckspeicher ausgebildet, in welcher der Wasserstoff unter einem sehr hohen Druck, beispielsweise 350 oder 700 bar, gespeichert ist. Anstelle der Verwendung von unter Druck gespeichertem Wasserstoff wäre es selbstverständlich auch denkbar, anstelle der Speichereinrichtung 13 eine Gaserzeugungseinrichtung einzusetzen, in welcher Wasserstoff beispielsweise aus einem kohlenwasserstoffhaltigen Ausgangsstoff erzeugt werden könnte.

Im Bereich der Brennstoffzelle 7 reagiert nun der Sauerstoff in dem Luftmassenstrom und der Wasserstoff miteinander, wobei die elektrische Leistung erzeugt wird, welche dann über die in Figur 1 dargestellte Elektronikeinheit 5 weiter genutzt wird. Außerdem entsteht im Bereich der Brennstoffzelle 7, und hier insbesondere im Bereich des Kathodenraums 8 der Brennstoffzelle 7, Produktwasser, welches mit einem Abgasstrom über eine Abgasleitung 15 aus dem Kathodenraum 8 abgeführt wird.

Im Anodenraum 9 der Brennstoffzelle 7 wird der Wasserstoff typischerweise nicht vollständig umgesetzt, da alleine schon um sämtliche Bereiche der Anode gleichmäßig mit Wasserstoff zu versorgen, ein entsprechender Überschuss an Wasserstoff über die Ventileinrichtung 14 in den Anodenraum 9 dosiert wird. Der unverbrauchte Wasserstoff wird daher über eine Rezirkulationsleitung 16 sowie eine Rezirkulationsfördereinrichtung 17 zurückgeführt und gelangt mit frischem aus der Speichereinrichtung 13 stammendem Wasserstoff zurück in den Anodenraum 9. Die Rezirkulationsfördereinrichtung 17 soll in dem hier dargestellten Ausführungsbeispiel als Wasserstoffzirkulationsgebläse 17 ausgebildet sein, welches elektromotorisch angetrieben wird.

Mit der Zeit reichert sich im Bereich dieser Anodenrezirkulation nun Inertgas an, welches durch die Membranen 10 hindurch aus dem Bereich des Kathodenraums 8 in den Anodenraum 9 diffundiert ist. Außerdem entsteht ein Teil des Produktwassers im Anodenraum 9. Um dieses Wasser und das Inertgas von Zeit zu Zeit aus der Anodenrezirkulation ablassen zu können, ist in dem hier dargestellten Ausführungsbeispiel des Brennstoffzellensystems 4 ein Ventil 18 vorgesehen, über welches diskontinuierlich von Zeit zu Zeit Wasser und/oder Gas aus dem Bereich der Anodenrezirkulation abgelassen werden kann. Anstelle des hier dargestellten einen Ventils 18, welches als kombiniertes Ventil für den sogenannten Drain (das Ablassen von Wasser) und den Purge (das Ablassen von Gas) genutzt wird, wären selbstverständlich auch zwei Ventile denkbar, welche einerseits für das Ablassen von Wasser und andererseits für das Ablassen von Gas vorgesehen sind. In bevorzugter Variante können diese beiden Funktionalitäten jedoch in dem Ventil 18 vereinigt sein, welches hierfür in bevorzugter Art und Weise in einem Wasserabscheider, welcher hier nicht dargestellt ist, angeordnet wird. Das über das Ventil 18 abgelassene Wasser und/oder Gas gelangt dann in den Bereich der Zuluftleitung 12, um zusammen mit der über die Luftfördereinrichtung 11 geförderten Zuluft in den Kathodenraum 8 zu gelangen. Im Kathodenraum 8 wird in dem über das Ventil 18 ausgetragenen Gas eventuell verbliebener Restwasserstoff an den dortigen Elektrokatalysatoren mit dem Sauerstoff der Luft umgesetzt, sodass keine Wasserstoffemissionen aus dem Brennstoffzellensystem 4 heraus auftreten. Das eingetragene Wasser wird in der trockenen und nach der Luftfördereinrichtung 11 heißen Zuluft entsprechend verdampft und befeuchtet diese. Überschüssiges Wasser wird zusammen mit dem Produktwasser über die Abgasleitung 15 ausgetragen.

In der Darstellung der Figur 2 ist außerdem ein optionaler Befeuchter 19 zu erkennen. In einem solchen Befeuchter 19 können beispielsweise für Wasserdampf durchlässige, für Luft und Abgas jedoch undurchlässige Membranen angeordnet sein. Auf der einen Seite der Membranen strömt nun der Luftmassenstrom in der Zuluftleitung 12, während auf der anderen Seite der Membranen der feuchte mit dem Produktwasser beladene Abgasstrom in der Abgasleitung 15 strömt. Dadurch kommt es zu einem Feuchtigkeitsausgleich zwischen den einzelnen Masseströmen, sodass die nach der Luftfördereinrichtung 11 typischerweise heiße und trockene Zuluft durch das in dem Abgasstrom vorhandene Produktwasser befeuchtet wird. Die so abgekühlte und befeuchtete Zuluft ist für die Membranen 10 weitaus besser verträglich, als eine nicht befeuchtete Luft. Je nach Einsatz von Membranenmaterial und Temperaturniveau kann auf den hier optional dargestellten Befeuchter 19 jedoch auch verzichtet werden.

Wie bereits erwähnt ist es nun so, dass das Fahrzeug 1 in bestimmten Situationen keine Leistung zum Vortrieb benötigt. In diesen Situationen wird über das Fahrzeugsteuergerät 6 eine Anforderung für einen Wechsel in den Stoppmodus erfolgen. Über eine Steuereinrichtung, welche beispielsweise Teil der Elektronikeinheit 5 sein kann, wird nun das Brennstoffzellensystem 4 dahingehend überprüft, ob die vorliegenden Betriebszustände, Temperaturen und Drücke den Wechsel in einen solchen Stoppmodus zulassen. Ist dies nicht der Fall, so wird das Brennstoffzellensystem vorerst weiter betrieben, bis entsprechende Betriebsbedingungen vorliegen, die einen solchen Wechsel erlauben.

Im typischerweise sehr viel häufiger auftretenden Fall, dass das Brennstoffzellensystem 4 bereit ist, um in den Stoppmodus zu wechseln, erfolgt ein solcher Wechsel. Das Brennstoffzellensystem 4 liefert während eines solchen Stoppmodus keine Energie für das Fahrzeug 1, bleibt aber im Gegensatz zu einem endgültigen Abstellen des Brennstoffzellensystems 4 und des Fahrzeugs 1 in einem Modus, aus welchem heraus ein Wiederstart in einer sehr kurzen Zeitspanne, insbesondere in deutlich weniger als einer Sekunde, möglich ist. Die Brennstoffzelle 7 bleibt elektrisch mit der Elektronikeinheit 5 kontaktiert, sie wird elektrisch also nicht ausgeschaltet. Die Luftfördereinrichtung 11 wird in dem Fall, dass es sich um ein Brennstoffzellensystem gemäß Figur 2 handelt, angehalten, die Druckversorgung des Anodenraums 9 mit Wasserstoff wird auf ein geringes Druckniveau reduziert. Die Rezirkulationsfördereinrichtung 17 wird weiterhin betrieben, jedoch mit einem sehr viel geringeren Massenstrom. Typischerweise kann dies durch eine Reduzierung der Drehzahl der in diesem Ausführungsbeispiel als Wasserstoffrezirkulationsgebläse ausgebildeten Rezirkulationsfördereinrichtung 17 erfolgen. Da nun kein Luftmassenstrom durch die Zuluftleitung 12 mehr zur Verfügung steht, muss außerdem das Ventil 18 während des Stoppmodus in jedem Fall geschlossen bleiben, auch wenn dieses beispielsweise aufgrund einer zeitlichen Ansteuerung während eines Stoppmodus für den Drain und/oder den Purge von Wasser und/oder Gas geöffnet werden sollte. Die Steuerung für den Stoppmodus muss hier also entsprechend Vorrang haben, sodass das Ventil 18 während des Andauems des Stoppmodus in jedem Fall geschlossen bleibt. Da während des Stoppmodus nur ein minimaler oder gar kein Strom aus der Brennstoffzelle 7 gezogen wird, kann es zu einem Anstieg des Wasserstoffdrucks im Anodenraum 9 kommen. Dieser Druck muss also entsprechend überwacht und auf ein vorgegebenes Druckfenster beziehungsweise ein vorgegebenes niedriges Druckniveau geregelt werden. Ein solches Druckniveau könnte beispielsweise zwischen 0,03 bar als minimaler Wasserstoffdruck und 0,6 bar als maximaler Wasserstoffdruck liegen. Aufgrund der ausbleibenden Luftversorgung des Kathodenraums 8 liegt hier kein oder nur ein minimaler Überdruck vor, sodass der Wasserstoffdruck alleine schon deshalb begrenzt werden muss, um die Membranen 10 nicht übermäßig zu belasten.

Zu Beginn der Stoppmodus liegt noch Restsauerstoff im Kathodenraum 8 vor. Es wird daher zu einem geringfügigen Stromfluss kommen. Während dieser Strom fließt und der Restsauerstoff im Kathodenraum 8 aufgebraucht wird, wird die Spannung der Brennstoffzelle 7 entsprechend abfallen. Der Restsauerstoff im Kathodenraum 8 wird dadurch aufgebraucht, der Strom kann beispielsweise in einer Endplattenbeheizung der Brennstoffzelle 7 oder in anderen Hilfsverbrauchern verwendet werden. Außerdem wird es durch eine Wasserstoffpermeation durch die Membranen 10 oder geringfügige Leckagen zum Eindringen von Wasserstoff in den Kathodenraum 8 kommen, welcher mit dem Sauerstoff reagiert.

In der darauffolgenden Phase des Stoppmodus wird eine konstante Spannung aufrechterhalten, um zu erreichen, dass der Hochspannungsbus des Brennstoffzellensystems 4 mit einer Spannung versorgt ist, welche eine Funktionalität des Hochspannungsbus auch weiterhin gewährleistet, und welche beispielsweise zum Antrieb der Rezirkulationsfördereinrichtung 17 erforderlich ist. Außerdem wird durch das Konstanthalten einer Spannung, beispielsweise auf einem Niveau von bis zu 0,85 Volt je Einzelzelle, die Anfälligkeit der Einzelzellen des Brennstoffzellenstacks 7 gegen Korrosion verringert. Die Spannung kann dabei über die Elektronikeinheit 5, welche beispielsweise einen DC/DC-Wandler umfasst, auf diesem konstanten Niveau gehalten werden. Nachdem der Sauerstoff im Kathodenraum 8 vollständig aufgebraucht ist, ist zum Aufrechterhalten dieser minimalen Spannung ein geringfügiger Stromfluss in die Brennstoffzelle 7 notwendig. Die hierfür erforderliche Leistung kann aus einer Energiespeichereinrichtung bereitgestellt werden, über welche das Fahrzeug 1 typischerweise verfügt. Eine solche Energiespeichereinrichtung, welche beispielsweise eine Batterie oder ein Hochleistungskondensator sein kann oder auch eine Kombination aus diesen Bauelementen, ist typischerweise in elektrisch angetriebenen Fahrzeugen 1 ohnehin vorhanden. Kommt es zu einem Leistungsüberschuss im Bereich des Brennstoffzellensystems 4, so kann überschüssige Leistung in dieser Energiespeichereinrichtung zwischengespeichert werden. Auch beim Abbremsen des Fahrzeugs 1 kann Leistung gewonnen werden, indem ein großer Teil des Bremsmoments nicht über Reibbremsen, sondern über einen generatorischen Betrieb des Antriebsmotors 2 aufgebracht wird. Die so zurückgewonnene elektrische Energie kann ebenfalls in der Energiespeichereinrichtung gespeichert und beispielsweise für das Wiederanfahren genutzt werden.

Die Energiespeichereinrichtung ist also in einem solchen Fahrzeug 1 in der Lage, auch ohne dass das Brennstoffzellensystem 4 betrieben wird beziehungsweise aktiv Leistung abgibt, eine zumindest geringe Menge an Leistung bereitzustellen. Diese reicht aus, um die Spannung im Bereich des Brennstoffzellenstacks 7 konstant zu halten. Dabei ist darauf zu achten, dass die Einzelzellen der Brennstoffzelle 7 einen geringfügigen negativen Strom tolerieren, ohne in ihrer Performance und Lebensdauer nachteilig beeinflusst zu werden.

Bei längerem Andauern des Stoppmodus kann es dazu kommen, dass die Spannungen an den Einzelzellen der Brennstoffzelle 7 anfangen auseinanderzulaufen. Da typischerweise nur auf die Gesamtspannung des Stacks, also des Stapels der Einzelzellen in der Brennstoffzelle 7 geregelt wird, können einzelne Zellen dann Spannungen aufweisen, welche hinsichtlich Korrosion für diese einzelne Zelle kritisch sind. Es kann daher vorgesehen werden, dass nach einer vorgegebenen Zeitspanne, die hier beispielsweise zwischen ca. 7 und 15 Minuten, bevorzugt ca. 10 Minuten, beträgt, ein sogenannter Refresh des Brennstoffzellensystems 4 erfolgt. Ein solcher Refresh sieht nun so aus, dass die Luftfördereinrichtung 11 entsprechend hochgefahren wird, bis ein vorgegebener Luftmassenstrom, beispielsweise in einer Größenordnung von ca. 25 kg/Stunde, erzielt wird. Nachdem dieser Luftmassenstrom erreicht ist, wechselt das Brennstoffzellensystem 4 wieder in den Stoppmodus, was hier letztlich nur bedeutet, dass die Luftfördereinrichtung 11 wieder angehalten wird, da die anderen Bedingungen weiterhin im Stoppmodus verharren. Durch den nunmehr wieder im Kathodenraum 8 vorliegenden Anteil an Sauerstoff kann erneut ein Strom aus der Brennstoffzelle 7 gezogen werden, bis die Spannung wieder auf das niedrige vorgegebene Niveau abgesunken ist, auf welches diese dann durch die Elektronikeinheit 5 entsprechend eingeregelt gehalten wird. Damit beginnt der Zeitablauf, bis die Zellspannungen wieder so weit auseinanderlaufen, dass einzelne Zellen in einen kritischen Zustand kommen, erneut. Sollte der Stoppmodus mehr als zwei Zeitspannen andauern, so kommt es nach erneutem Ablauf der Zeitspanne zu einem zweiten Refresh. Bleibt der Stoppmodus auch weiterhin erhalten, so kann theoretisch noch ein dritter Refresh erfolgen, wobei typischerweise nach Ablauf einer vorgegebenen Zeit vom Stoppmodus in den endgültig abgestellten Modus des Brennstoffzellensystems 4 gewechselt wird. Eine solche vorgegebene Zeit kann dabei typischerweise in der Größenordnung von 2 bis 3 der Zeitspannen bis zu einem Refresh liegen.

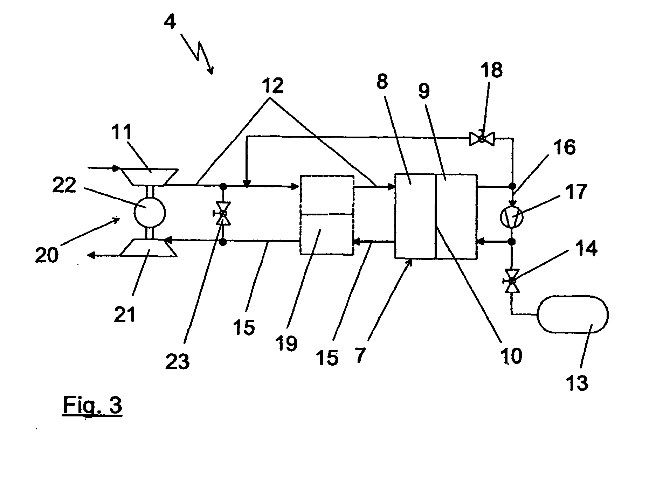

In der Darstellung der Figur 3 ist nun ein erfindungsgemäßes Brennstoffzellensystem 4 zu erkennen, welches im Wesentlichen vergleichbar zu dem in Figur 2 dargestellten Brennstoffzellensystem 4 aufgebaut ist. Lediglich die Luftfördereinrichtung 11 ist in dem hier dargestellten Ausführungsbeispiel des Brennstoffzellensystems 4 als Strömungsverdichter ausgebildet. Die Luftfördereinrichtung 11 soll dabei Teil eines sogenannten elektrischen Turboladers 20 sein, welcher neben dem Strömungsverdichter 11 außerdem eine Turbine 21 und eine elektrische Maschine 22 aufweist. Der Aufbau des elektrischen Turboladers 20, welcher auch als ETC (Electric Turbo Charger) bezeichnet wird, ist dabei prinzipiell aus dem Stand der Technik bekannt. Die Luftförderung zur Brennstoffzelle 7 erfolgt hierbei über den Strömungsverdichter 11, welcher bei Bedarf von der elektrischen Maschine 22 angetrieben wird. Über die Turbine 21 wird außerdem das aus dem Kathodenraum 8 über die Abgasleitung 15 kommende Abgas entspannt, sodass die aus dem Abgasstrom zurückgewonnene Energie ebenfalls für den Strömungsverdichter 11 zur Verfügung gestellt werden kann. Kommt es in speziellen Situationen und Betriebszuständen des Brennstoffzellensystems 4 zu einem sehr geringen Energiebedarf des Strömungsverdichters 11, so kann es sein, dass an der Turbine 21 mehr Leistung bereitgestellt wird, als der Strömungsverdichter 11 benötigt. In diesem Fall kann die elektrische Maschine 22 als Generator betrieben werden, um diese Leistung in der oben bereits erwähnten Energiespeichereinrichtung einzuspeichern.

Der Wechsel in den Stoppmodus funktioniert bei dem in Figur 3 dargestellten Brennstoffzellensystem 4 im Wesentlichen vergleichbar wie bei dem im Rahmen der Figur 2 bereits erläuterten Brennstoffzellensystem 4. Aufgrund der Tatsache, dass der elektrische Turbolader im regulären Betrieb mit sehr hohen Drehzahlen von typischerweise weit über 50.000 U/min läuft, stellt das Abbremsen des elektrischen Turboladers auf eine Drehzahl von 0 sowie das Wiederanlaufen aus dem Stillstand heraus einen vergleichsweise hohen Aufwand dar, welcher insbesondere sehr viel Zeit benötigt. Aus diesem Grund wird beim Wechsel in den Stoppmodus, sofern ein elektrischer Turbolader beziehungsweise ein Strömungsverdichter 11 als Luftfördereinrichtung eingesetzt wird, dieser nicht gänzlich angehalten, sondern läuft auf einer entsprechend vorgegebenen Minimaldrehzahl in der Größenordnung von 10 - 12.000 U/min. weiter. Dadurch wird ein geringer Luftmassenstrom auch im Stoppmodus in den Kathodenraum 8 gefördert. Dieser sorgt dafür, dass ständig ein geringer Strom aus der Brennstoffzelle 7 gezogen werden muss, um die Spannung entsprechend zu begrenzen. Dieser Strom kann aber beispielsweise zum Antrieb der Rezirkulationsfördereinrichtung 17 (mit-)verwendet werden, sodass hierdurch keine ungenutzte elektrische Energie entsteht. Außerdem kann durch die ständige geringfügige Luftversorgung des Anodenraums auf den oben beschriebenen Refresh bei dem hier dargestellten Brennstoffzellensystem 4 verzichtet werden.

Um nun dennoch die Luftmenge, welche in den Kathodenraum 8 gelangt, möglichst gering zu halten, ist vorgesehen, dass die Zuluftleitung 12 und die Abgasleitung 15 nach der Luftfördereinrichtung 11 strömungstechnisch verbunden werden. In der Darstellung des Brennstoffzellensystems 4 in Figur 3 dient hierzu ein System-Bypass-Ventil 23, welches eine Verbindung mit sehr niedrigem Druckverlust für den geförderten Luftmassenstrom zur Verfügung stellt. Ohne den Kathodenraum 8 mit aufwendigen und teuren Ventileinrichtungen absperren zu müssen, wird so erreicht, dass der größte durch das Laufenlassen der Luftfördereinrichtung auf geringer Drehzahl verursachte Luftmassenstrom durch das System-Bypass-Ventil 23 wieder an die Umgebung abgeblasen wird, wobei ein Teil der zum Verdichten investierten Energie über die Turbine 21 zurückgewonnen werden kann. Lediglich ein sehr geringer Anteil des Volumenstroms wird den Wege des etwas höheren Druckverlusts gehen und durch den Kathodenraum 8 strömen. Dieser Anteil reicht jedoch aus, um die Betriebsbereitschaft der Brennstoffzelle 7 ohne einen Refresh und auch über einen längeren Zeitraum hinweg zu gewährleisten, ohne dass hierdurch Nachteile hinsichtlich der Lebensdauer der Brennstoffzelle 7 zu befürchten wären.

Mit dem System-Bypass-Ventil 23 können austelle des elektrischen Turboladers 20 sowohl ein Strömungsverdichter oder auch ein volumetrischer Verdichter als Luftfördereinrichtung vorgesehen werden. Es kann nicht nur aktiv weitergeförderte Luftmassenströme weitestgehend ohne Passage des Kathodenraums 8 um das System leiten, sondern kann auch einen Luftmassenstrom, welcher beispielsweise aufgrund eines Staudrucks in die Zuluftleitung 12 eindringt, beispielsweise beim Bergabrollen des Fahrzeugs 1, entsprechend ableiten.

Das erfindungsgemäße Verfahren zur Realisierung eines Stopp/Start-Betriebs für ein Fahrzeug 1 mit einem Brennstoffzellensystem 4 ermöglicht damit die Vorteile des Stopp/Start-Betriebs zu erzielen, ohne die Brennstoffzelle 7 hinsichtlich ihrer Lebensdauer unnötig zu belasten. Durch das gezielte Standby mit weiterhin verbleibender elektrischer Kontaktierung der Brennstoffzelle 7 und geringfügig aufrechterhaltenem Druck des Wasserstoffs, bei gleichzeitig weiterlaufender Rezirkulationsfördereinrichtung 17 und im Falle eines Strömungsverdichters geringfügig fortlaufendem Strömungsverdichter 11, ermöglicht einen extrem schnellen Wiederstart des Brennstoffzellensystems in einer Größenordnung von wenigen 100 ms. Dieser Aufbau lässt sich damit ideal für Fahrzeuge 1 verwenden, welche trotz häufiger Start- und Stopp-Phasen für ihren Nutzer einen sicheren, zuverlässigen und außerordentlichen bequemen Betrieb ermöglichen sollen.

## Patentansprüche

1. Verfahren zum Betreiben eines Brennstoffzellensystems in einem Fahrzeug, wobei das Brennstoffzellensystem bei Bedarf in einen vorübergehenden Stoppmodus geschaltet und aus diesem heraus wieder gestartet wird, wobei das Brennstoffzellensystem wenigstens eine Brennstoffzelle umfasst, welche kathodenseitig über eine Luftfördereinrichtung mit einem Luftmassenstrom und anodenseitig über eine Einrichtung zur Brenngasversorgung mit einem Brenngasmassenstrom versorgt wird, wobei ausgehend vom Fahrzeug in bestimmten Fahrsituationen eine Anforderung für einen Wechsel in den Stoppmodus erfolgt, wobei geprüft wird, ob die aktuellen Betriebsbedingungen des Brennstoffzellensystems einen Wechsel in den Stoppmodus erlauben, wobei bei erlaubtem Wechsel in den Stoppmodus gewechselt wird, und wobei bei einem ausgehend vom Fahrzeug geforderte Wiederstart des Brennstoffzellensystems die Einstellungen des Stoppmodus wieder aufgehoben werden, wobei der Wechsel in den Stoppmodus umfasst, dass, bei weiterhin bestehender elektrischen Kontaktierung der Brennstoffzelle (7), Strom aus der Brennstoffzelle gezogen wird, der von der Luftfördereinrichtung (11) geförderte Luftmassenstrom gestoppt oder auf einen vorgegebenen Wert reduziert wird, und der Druck des zugeführten Brenngases auf einen vorgegebenen Wert reduziert wird, ohne die Zufuhr des Brenngases zu unterbrechen,
**dadurch gekennzeichnet, dass**
beim Wechsel in den Stoppmodus ferner zwischen dem Luftmassenstrom zur Brennstoffzelle (7) nach der Luftfördereinrichtung (11) und einem Abgasstrom aus dem Brennstoffzellensystem (4) eine Strömungsverbindung geöffnet wird.

2. Verfahren nach Anspruch 1,
**dadurch gekennzeichnet, dass**
in dem Brennstoffzellensystem (4) unverbrauchtes Brenngas von einem Bereich nach der Anode (9) über eine Rezirkulationsfördereinrichtung (17) zusammen mit frischem Brenngas aus einer Ventileinrichtung (14) zur Brenngaszufuhr der Anode (9) erneut zugeführt wird, wobei der Wechsel in den Stoppmodus ferner umfasst, dass der von der Rezirkulationsfördereinrichtung (17) geförderte Massenstrom auf einen vorgegebenen Wert reduziert wird.

3. Verfahren nach Anspruch 1 oder 2,
**dadurch gekennzeichnet, dass**
die Rezirkulationsfördereinrichtung (17) als elektromotorisch angetriebenes Gebläse ausgebildet ist, wobei dieses während des Stoppmodus auf einer vorgegebenen niedrigen Drehzahl weiterläuft.

4. Verfahren nach Anspruch 1, 2 oder 3,
**dadurch gekennzeichnet, dass**
der Druck des Brenngases auf einen vorgegebenen Wertebereich geregelt wird.

5. Verfahren nach einem der Ansprüche 1 bis 4,
**dadurch gekennzeichnet, dass**
die Brennstoffzelle (7) elektrisch mit einer Elektronikeinheit (5) zur Abnahme der Leistung der Brennstoffzelle (7) gekoppelt ist, durch welche auch überschüssige Leistung der Brennstoffzelle (7) in einer Energiespeichereinrichtung gespeichert wird, wobei durch die Elektronikeinheit (5) nach dem Wechsel in den Stoppmodus ein elektrischer Strom aus der Brennstoffzelle (7) gezogen wird, bis eine vorgegebene Spannung erreicht ist, wonach die Brennstoffzelle (7) geregelt auf einer konstanten Spannung gehalten wird.

6. Verfahren nach einem der Ansprüche 1 bis 5,
**dadurch gekennzeichnet, dass**
beim Wechsel in den Stoppmodus die Luftfördereinrichtung (11) angehalten wird.

7. Verfahren nach einem der Ansprüche 1 bis 6,
**dadurch gekennzeichnet, dass**
nachdem der Stoppmodus eine vorgegebene Zeitspanne angedauert hat, eine vorübergehende Erhöhung des Luftmassenstroms durchgeführt wird, wobei nach Erreichen eines vorgegebenen Werts des Luftmassenstroms wieder in den Stoppmodus gewechselt wird.

8. Verfahren nach Anspruch 7,
**dadurch gekennzeichnet, dass**
die Zeitspanne in der Größenordnung von 7 bis 15 Minuten vorgegeben wird.

9. Verfahren nach einem der Ansprüche 1 bis 5,
**dadurch gekennzeichnet, dass**
als Luftfördereinrichtung (11) ein Strömungsverdichter eingesetzt wird, welcher während des Stoppmodus auf einer vorgegebenen niedrigen Drehzahl weiterläuft.

10. Verfahren nach Anspruch 9,
**dadurch gekennzeichnet, dass**
als Strömungsverdichter ein elektrischer Turbolader (20) eingesetzt wird.

11. Verfahren nach Anspruch 9 oder 10,
**dadurch gekennzeichnet, dass**
die vorgegebene niedrige Drehzahl kleiner als 15.000 U/min, bevorzugt kleiner als 12.000 U/min vorgegeben wird.

12. Verfahren nach einem der Ansprüche 1 bis 11,
**dadurch gekennzeichnet, dass**
aus dem Bereich der Anodenrezirkulation wenigstens eine mit einem Ventil (18) versehene Leitung zum diskontinuierlichen Ablassen von Wasser und/oder Gas aus dem Bereich der Anodenrezirkulation in den Bereich des zur Brennstoffzelle (7) strömenden Luftmassenstroms führt, wobei während des Stoppmodus das wenigstens eine Ventil (18) geschlossen gehalten wird.

13. Verfahren nach einem der Ansprüche 1 bis 12,
**dadurch gekennzeichnet, dass**
die Brennstoffzelle (7) als PEM-Brennstoffzelle ausgebildet ist und mit Wasserstoff als Brenngas betrieben wird.

## Claims

1. Method for operating a fuel cell system in a vehicle, wherein the fuel cell system is switched to a temporary stop mode if required and restarted therefrom, wherein the fuel cell system comprises at least one fuel cell which is supplied with an air mass flow via an air delivery device on the cathode side and with a fuel gas mass flow via a device for fuel gas supply on the anode side, wherein a change-over to the stop mode is requested by the vehicle in certain driving situations, wherein it is checked whether the current operating conditions of the fuel cell system allow a change-over to the stop mode, wherein the system changes over to the stop mode if permitted and wherein, at a restart of the fuel cell system requested by the vehicle, the stop mode is cancelled, the change-over to the stop mode including the drawing of current from the fuel cell if the fuel cell (7) remains contacted electrically, the stopping of the air mass flow delivered by the air delivery device (11) or its reduction to a preset value, and the reduction of the pressure of the fuel gas supplied to a preset value without interrupting the fuel gas supply,
**characterised in that**
a flow connection is further opened between the air mass flow to the fuel cell (7) downstream of the air delivery device (11) and an exhaust gas flow from the fuel cell system (4).

2. Method according to claim 1,
**characterised in that**
fuel gas which has not been consumed in the fuel cell system (4) is fed from a region downstream of the anode (9), together with fresh fuel gas from a valve device (14), again to the fuel gas feed of the anode (9) via a recirculation device (17), the change-over to the stop mode further including the reduction of the mass flow delivered by the recirculation device (17) to a preset value.

3. Method according to claim 1 or 2,
**characterised in that**
the recirculation device (17) is designed as a fan driven by an electric motor, this fan continuing to run at a preset low speed in the stop mode.

4. Method according to claim 1, 2 or 3,
**characterised in that**
the pressure of the fuel gas is controlled to within a preset range of values.

5. Method according to any of claims 1 to 4,
**characterised in that**
the fuel cell (7) is electrically coupled to an electronic unit (5) for collecting the power of the fuel cell (7), by means of which electronic unit (5) surplus power of the fuel cell is stored in an energy storage device, wherein the electronic unit (5), following the change-over to the stop mode, draws an electric current from the fuel cell (7) until a preset voltage is reached, whereupon the fuel cell (7) is regulated and held to a constant voltage.

6. Method according to any of claims 1 to 5,
**characterised in that**
the air delivery device (11) is stopped at the change-over to the stop mode.

7. Method according to any of claims 1 to 6,
**characterised in that**
after the stop mode has been maintained for a preset period of time, the air mass flow is temporarily increased, and when the air mass flow has reached a preset value, the stop mode is re-established.

8. Method according to claim 7,
**characterised in that**
a period of time in the range of 7 to 15 minutes is preset.

9. Method according to any of claims 1 to 5,
**characterised in that**
a flow compressor which continues to run at a preset low speed in the stop mode is used as an air delivery device (11).

10. Method according to claim 9,
**characterised in that**
an electric turbocharger (20) is used as a flow compressor.

11. Method according to claim 9 or 10,
**characterised in that**
the preset low speed is preset at less than 15 000 rpm, preferably less than 12 000 rpm.

12. Method according to any of claims 1 to 11,
**characterised in that**
from the region of the anode recirculation, at least one line provided with a valve (18) for the intermittent discharge of water and/or gas leads to the region of the air mass flow flowing to the fuel cell (7), the at least one valve (18) being held in the closed position in the stop mode.

13. Method according to any of claims 1 to 12,
**characterised in that**
the fuel cell (7) is designed as a PEM fuel cell and is operated with hydrogen as a fuel gas.

## Revendications

1. Procédé de fonctionnement d'un système de piles à combustible dans un véhicule, le système de piles à combustible pouvant, en fonction des besoins, être placé dans un mode d'arrêt transitoire et le quitter, le système de piles à combustible comprenant au moins une pile à combustible qui est alimentée côté cathode par un flux massique d'air par l'intermédiaire d'un dispositif d'amenée d'air et côté anode par un flux massique de gaz combustible par l'intermédiaire d'un dispositif d'alimentation en gaz combustible, à partir du véhicule, dans certaines situations de conduite, un ordre étant envoyé pour le passage dans le mode d'arrêt, , le système vérifiant si les conditions de fonctionnement du système de piles à combustible actuelles permettent un passage dans le mode d'arrêt, si le passage est autorisé, le passage dans le mode d'arrêt a lieu et lorsque le véhicule envoie une instruction de redémarrage du système de piles à combustible les paramètres du mode d'arrêt sont de nouveau supprimés, le passage dans le mode d'arrêt consistant à ce que du courant est prélevé de la pile à combustible, le flux d'air massique transporté par le dispositif d'amenée d'air (11) est coupé ou réduit à une valeur prédéterminée, tout en maintenant les contacts électriques de la pile à combustible (7), et la pression du gaz de combustible fourni est réduite à une valeur prédéterminée de la pression du gaz combustible fourni sans que l'alimentation du gaz combustible ne soit interrompue, **caractérisé en ce que** lors du passage dans le mode arrêt une liaison d'écoulement est en outre ouverte entre le flux massique d'air vers la pile à combustible (7) après le dispositif d'amenée d'air (11) et un flux de gaz provenant du système de piles à combustible (4).

2. Dispositif selon la revendication 1, **caractérisé en ce que** le gaz combustible non consommé provenant d'une zone après l'anode (9) est réinjecté conjointement avec du gaz combustible frais provenant d'un dispositif de soupapes (14) pour l'alimentation en gaz combustible de l'anode (9) dans le système de piles à combustible (4) par un dispositif de recirculation (17), le passage dans le mode d'arrêt consiste en outre à ce que le flux massique acheminé par le dispositif d'alimentation de recirculation (17) est réduit à une valeur prédéterminée.

3. Procédé selon la revendication 1 ou la revendication 2, **caractérisé en ce que** le dispositif de recirculation (17) est conçu comme un ventilateur entraîné par un moteur électrique, qui dans le mode d'arrêt continue de fonctionner à une faible vitesse prédéterminée.

4. Procédé la revendication 1, 2 ou 3, **caractérisé en ce que** la pression du gaz combustible est réglée dans une plage de valeurs prédéterminée.

5. Procédé selon l'une quelconque des revendications 1 à 4, **caractérisé en ce que** la pile à combustible (7) est couplée électriquement à une unité électronique (5) destinée à réduire la puissance de la pile à combustible (7) et par laquelle la puissance excédentaire de la pile à combustible (7) est stockée dans un dispositif accumulateur d'énergie, l'unité électronique (5) prélevant après le passage dans le mode d'arrêt un courant électrique à partir de la pile à combustible (7) jusqu'à ce qu'une tension prédéterminée soit atteinte, après quoi la pile à combustible (7) est maintenue à une tension constante.

6. Procédé selon l'une quelconque des revendications 1 à 5, **caractérisé en ce qu'**au moment du passage dans le mode d'arrêt, le dispositif d'alimentation en air (11) s'arrête.

7. Procédé selon l'une quelconque des revendications 1 à 6, **caractérisé en ce qu'**après que le mode d'arrêt a continué pendant un laps de temps prédéterminé, le flux massique d'air augmente momentanément, une fois qu'une valeur prédéterminée du flux massique d'air a été atteinte, le passage dans le mode d'arrêt a lieu.

8. Procédé selon la revendication 7, **caractérisé en ce que** le laps de temps est prédéterminé dans l'ordre de grandeur entre 7 et 15 minutes.

9. Procédé selon l'une quelconque des revendications 1 à 5, **caractérisé en ce que** un compresseur à écoulement est utilisé en tant que dispositif d'alimentation en air (11) qui continue de fonctionner à une faible vitesse prédéterminée dans le mode d'arrêt.

10. Procédé selon la revendication 9, **caractérisé en ce qu'**un turbocompresseur électrique (20) est utilisé comme compresseur à écoulement.

11. Procédé selon la revendication 9 ou la revendication 10, **caractérisé en ce que** la vitesse faible prédéterminée est inférieure à 15 000 tr/min, de préférence inférieure à 12 000 tr/min.

12. Procédé selon l'une quelconque des revendications 1 à 11, **caractérisé en ce que** provenant de la zone de recirculation anodique au moins une conduite pourvue d'une soupape (18) servant à l'écoulement discontinu d'eau et/ou de gaz conduit dans la zone du flux massique d'air s'écoulant vers la pile à combustible (7), l'au moins une soupape (16) étant maintenue fermée pendant le mode d'arrêt.

13. Procédé selon l'une quelconque des revendications précédentes de 1 à 12, **caractérisé en ce que** la pile à combustible (7) est conçue comme une pile à combustible à membrane électrolytique polymère et fonctionne avec de l'hydrogène comme gaz combustible.
